# EUROPÄISCHE PATENTSCHRIFT

(11) **EP 2 713 034 B1**
(45) Veröffentlichungstag und Bekanntmachung des Hinweises auf die Patenterteilung: **10.04.2019**
(21) Anmeldenummer: 13004023.1
(22) Anmeldetag: 13.08.2013
(51) Int. Cl.: F16L 37/02, F16L 21/02, F16L 25/14

(54) **Steckstück**
Plug-in piece
Pièce enfichable

(30) Priorität: 28.09.2012 DE 102012019106
(43) Veröffentlichungstag der Anmeldung: 02.04.2014
(73) Patentinhaber: Carl Freudenberg KG, 69469 Weinheim (DE)
(72) Erfinder: Unger, Hans, 69518 Abtsteinach (DE); Heldmann, Ralf, 69483 Wald-Michelbach (DE); Stephan, Ingo, 64668 Rimbach (DE); Clemens, Markus, 64385 Reichelsheim (DE); Hartmann, Carsten, 69493 Hirschberg (DE); Jakob, Ernst, 64668 Rimbach (DE); Reddig, Stephan, 67659 Kaiserslautern (DE)

(56) Entgegenhaltungen:
- EP-A1- 2 325 937
- US-A1- 2010 207 332

## Beschreibung

### Technisches Gebiet

Die Erfindung betrifft ein Steckstück zum dichtenden Verbinden zweier einander zugeordneter Zylinderflächen, umfassend einen im Wesentlichen rohrförmigen Stützkörper, welcher an seinen Enden ringförmig umlaufende Dichtelemente aufweist, die zur Herstellung einer dichten Verbindung mit den abzudichtenden Zylinderflächen in Eingriff bringbar sind, wobei wenigstens eines der Dichtelemente als auf der Außenfläche des Stützkörpers ringförmig umlaufender Dichtwulst mit einer kugelförmig gewölbten Dichtfläche ausgebildet ist.

### Stand der Technik

Steckstücke werden in der Regel dazu verwendet, zwei benachbart zueinander angeordnete Gehäuseteile, wie z, B. einen Motorblock mit Nebenaggregaten mediendicht miteinander zu verbinden. Sie bestehen in der Regel aus einem rohr- oder hülsenförmigen Stützkörper aus einem zähharten Werkstoff, der an seinen beiderseitigen Enden am Außen- und/oder Innenumfang mit ringförmig umlaufenden Dichtelementen aus einem gummielastischen Werkstoff versehen ist. Die Steckstücke werden zum Verbinden der Gehäuseteile mit ihren Enden in entsprechende Bohrungen der Gehäuseteile eingeführt bzw. auf entsprechende Rohrstutzen aufgesteckt.

Beim Einführen der Enden des hülsenförmigen Stützkörpers in die jeweiligen Bohrungen der Gehäuseteile bzw. eines Rohrstutzens in das Steckstück legen sich die Dichtelemente aus gummielastischem Werkstoff dichtend an die Innenwände der Bohrungen bzw. die Außenwand des Rohrstutzens an und stellen somit eine mediendichte Verbindung zwischen den beiden Gehäuseteilen her.

Ein Steckstück der gattungsgemäßen Art ist zum Beispiel aus der DE 195 48 249 A1 bekannt. Das bekannte Steckstück weist an seinem einen Ende einen kugelförmig ausgebildeten Dichtwulst aus einem Elastomer auf. Der kugelförmig ausgebildete Dichtwulst gewährleistet ein sicheres dichtendes Anliegen an der Innenfläche der Bohrung auch dann, wenn die Längsachsen der Bohrungen und des Steckstücks einen Winkelversatz zueinander aufweisen. Weiterhin kann die Innenfläche der Bohrung bei einer Auslenkungen der Verbindungselemente auf dem kugelförmigen Dichtwulst abrollen, wobei die Dichtheit der Verbindung gewährleistet bleibt. Durch das Abrollen wird der Abrieb des Elastomers im Vergleich zu einem Rutschen oder Gleiten aufgrund des verringerten Reibungswiderstands stark reduziert.

Nachteilig an dem bekannten Steckstück ist, dass die Umfangsverpressung des Dichtwulstes in Abhängigkeit von der Winkelstellung variiert, wodurch es bei Kardanik zu einer unterschiedlichen Abnutzung des Dichtwulstes an der gewölbten Dichtfläche kommen kann.

US2010/207332 A1 offenbart ein Steckstück zum dichtenden Verbinden zweier einander zugeordneter Zylinderflächen, umfassend einen im Wesentlichen rohrförmigen Stützkörper, welcher an seinen Enden ringförmig umlaufende Dichtelemente aufweist, die zur Herstellung einer dichten Verbindung mit jeweils einer der abzudichtenden Zylinderflächen in Eingriff bringbar sind, wobei wenigstens eines der Dichtelemente als auf der Außenfläche des Stützkörpers ringförmig umlaufender Dichtwulst mit einer kugelförmig gewölbten Dichtfläche ausgebildet ist.

### Darstellung der Erfindung

Die Aufgabe der Erfindung besteht darin, ein Steckstück der gattungsgemäßen Art so weiterzubilden, dass die Lebensdauer und Funktion unabhängig von der Einbausituation gleichbleibend hoch ist.

Diese Aufgabe wird mit einem Steckstück mit allen Merkmalen des Patenanspruchs 1 gelöst. Vorteilhafte Ausgestaltungen der Erfindung werden in den Unteransprüchen beschrieben.

Das erfindungsgemäße Steckstück zum dichtenden Verbinden zweier einander zugeordneter Zylinderflächen umfasst einen im Wesentlichen rohrförmigen Stützkörper, welcher an seinen Enden ringförmig umlaufende Dichtelemente aufweist, die zur Herstellung einer dichten Verbindung mit den abzudichtenden Zylinderflächen in Eingriff bringbar sind, wobei wenigstens eines der Dichtelemente als auf der Außenfläche des Stützkörpers ringförmig umlaufender Dichtwulst mit einer kugelförmig gewölbten Dichtfläche ausgebildet ist. Erfindungsgemäß ist vorgesehen, dass dass der Kugelradius der Dichtfläche so gewählt ist, dass der Kugel-Mittelpunkt in etwa auf der Symmetrieachse des Stützkörpers liegt. Es hat sich gezeigt, dass in diesem Fall die Anpresskräfte unabhängig von der Winkelstellung über die gesamte Oberfläche des Dichtwulstes weitgehend konstant sind.

Vorzugsweise beträgt hierbei die Abweichung des Kugelmittelpunkts von der Symmetrieachse des Stützkörpers weniger als 10 % des Kugelradius, d. h. der Länge des Außendurchmessers des Dichtwulstes. Bei Abweichungen größer als 10 % können bei extremen Winkelstellungen die Anpresskräfte variieren. Besonders bevorzugt beträgt die Abweichung nur etwa 2 % des Kugelradius. Eine Abweichung von weniger als 2 % ist aufgrund der Fertigungstoleranzen, die bei üblichen Steckstückgeometrien eine Mittelpunktsbestimmung im Werkzeug nur mit einem Fehler von bis zu 0,5 % bis 1 % des Außendurchmessers erlauben, nur schwer einstellbar.

Gemäß einer weiteren bevorzugten Ausführungsform der Erfindung weist der Stützkörper an seinem zweiten Ende einen weiteren, auf dem Außenumfang des Stützkörpers umlaufenden Dichtwulst auf. Diese Stützkörper ist geeignet, zwei benachbart zueinander angeordnete Bohrungen dichtend miteinander zu verbinden.

Vorzugsweise weisen solche Steckstücke zum Verbinden von Hohlkörpern bzw. Bohrungen mit gleichem Innendurchmesser eine Hantelform auf, wobei der erste und der zweite Dichtwulst an den beiden Enden zueinander spiegelbildlich ausgebildet sind.

Das Steckstück kann aber auch so ausgebildet werden, dass es an seinem zweiten Ende zur Abdichtung gegenüber einer äußeren Zylinderfläche, z. B. der Außenfläche eines in dieses Ende einsteckbaren rohrförmigen Hohlkörpers, geeignet ist. Zu diesem Zweck kann an dem zweiten Ende des Stützkörpers anstelle eines außen umlaufenden Dichtelementes ein auf dem Innenumfang umlaufendes, radial nach innen weisendes zweites Dichtelement vorgesehen sein. Bei engen Einbauräumen ist es hierbei vorteilhaft, wenn das erste und das zweite Dichtelement in der gleichen Axialebene liegen. Dies hat den Vorteil, dass das Steckstück als Verbindungselement keinen zusätzlichen Bauraum beansprucht, da die rohrförmigen Hohlkörper übereinander geschoben werden können.

Das erfindungsgemäße Steckstück kann auch bei zu verbindenden Zylinderflächen mit unterschiedlichen Innen bzw. Außendurchmessern eine Adapterfunktion dadurch erfüllen, dass sich der Innendurchmesser des Stützkörpers sich von dem einen stirnseitigen Ende zum anderen stirnseitigen Ende hin aufweitet. Der Übergang vom kleineren zum größeren Durchmesser kann hierbei stufig oder aber auch kontinuierlich erfolgen.

Ein erfindungsgemäßes Steckstück kann zusätzlich noch Staublippen aufweisen, um das Eindringen von Staub zu verhindern.

Ebenfalls können an sich bekannte Zentrierlippen oder Zentriernocken vorgesehen sein, die das Steckstück zusätzlich in der Bohrung zentrieren.

Um den Halt in einer Bohrung zu verstärken, können auch Rückhaltelippen, die sich beim Herausziehen in der Bohrung verkrallen, vorgesehen sein.

Gemäß einer weiteren Ausführungsform der Erfindung ist der Stützkörper auf seinem Außen- und/oder Innenumfang wenigstens teilweise mit einer Ummantelung versehen ist. Diese schützt den Stützkörper gegen mechanische und auch chemische Belastungen, die von außen einwirken könnten. Insbesondere kann die Ummantelung bei Stützkörpern aus Metall als Korrosionsschutz dienen, so dass sekundäre Rostschutzmaßnahmen, wie z. B. das Aufbringen von Lackierungen oder dergleichen vermieden werden.

Vorzugsweise sind die Dichtelemente und die Ummantelung einstückig und ineinander übergehend ausgebildet sind.

Gemäß einer weiteren bevorzugten Ausführungsform der Erfindung weisen die Dichtelemente Einführschrägen auf, um die Montage noch weiter zu vereinfachen. Die Dichtelemente können auch an den stirnseitigen Enden des Stützkörpers etwas überstehen.

Der zylinderförmige Stützkörper besteht vorzugsweise aus einem schlagzähen Material, besonders bevorzugt aus einem metallischen Werkstoff. Damit ist die Dimensionsstabilität des Stützkörpers und insbesondere die der Durchgangsöffnungen gewährleistet.

Die Dichtelemente und die Ummantelung bestehen vorzugsweise aus einem gummielastischen Werkstoff, besonders bevorzugt aus einem Elastomer oder PTFE. Im Falle eines elastomeren Werkstoffs sind die Dichtwülste bzw. die Ummantelung vorzugsweise auf die Stützhülse aufvulkanisiert. Hierdurch wird ein absolut dichter Verbund zwischen dem Elastomer und der Verbindungshülse erzielt.

Nachfolgend wird de Erfindung anhand der Zeichnung näher erläutert.

### Kurzbeschreibung der Zeichnung

Es zeigen:
- Fig. 1:: in einer schematischen Längsschnittdarstellung und in einer perspektivischen 3D-Darstellung ein Steckstück mit erfindungsgemäß ausgebildeten kugelförmigen Dichtwülsten an beiden Stirnseiten;
- Fig. 2:: in einer schematischen Längsschnittdarstellung ein Steckstück mit einem erfindungsgemäß ausgebildeten kugelförmigen Dichtwulst an einer Stirnseite und einem nach innen weisenden Dichtelement an der anderen Stirnseite, die beide in einer Radialebene liegen;
- Fig. 3:: das Steckstück aus Fig. 1 mit Adapterfunktion;
- Fig. 4:: das Steckstück aus Fig. 1 mit Zentriernocken;
- Fig. 5:: das Steckstück aus Fig. 1 mit Staublippen;
- Fig. 6:: das Steckstück aus Fig. 2 mit Staublippen;

### Ausführung der Erfindung

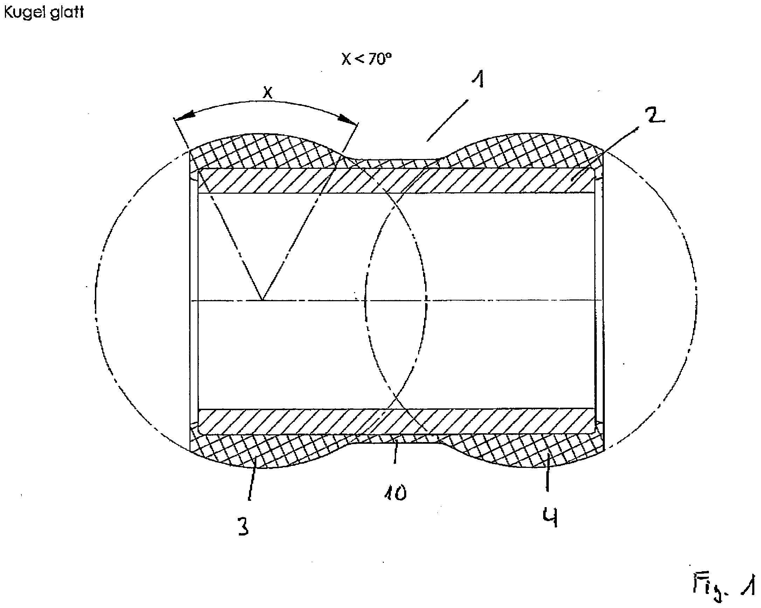

Man erkennt in Fig. 1 ein Ausführungsbeispiel eines erfindungsgemäßen Steckstücks 1 mit einem Stützkörper 2, an dessen beiden Enden auf dem Außenumfang Dichtwülste 3 und 4 umlaufen. Die Dichtwülste 3 und 4 sind zueinander spiegelsymmetrisch ausgebildet, das Steckstück 1 hat dadurch die Gestalt einer Hantel. Die Dichtwülste 3 und 4 stehen an beiden Enden axial nach außen etwas über.

Die Dichtwülste 3 und 4 sind kugelförmig ausgebildet. Zur Verdeutlichung ist der Kugelradius als strichpunktierte Linie mit eingezeichnet. Hierbei ist der Kugelradius so gewählt, dass, wie man anhand der strichpunktiert eingezeichneten Radien leicht sieht, der Kugel-Mittelpunkt in etwa auf der Symmetrieachse des Stützkörpers 2 liegt. Dadurch sind die Anpresskräfte unabhängig von der Winkelstellung des Steckstücks in dem Einbauraum über die gesamte Oberfläche der Dichtwülste 3, 4 weitgehen konstant.

In dieser Figur, wie auch in den übrigen Figuren ist das Steckstück 1 weiterhin auf dem Außenumfang mit einer Ummantelung 10 umgeben, die ohne Beschränkung der Allgemeinheit mit den Dichtelementen 3, 4 einstückig und materialeinheitlich ausgebildet ist.

Im Längsschnitt stellt sich der kugelförmige Dichtwulst 3, 4 als Kreissegment mit dem Mittelpunktswinkel "X" dar. Die Größe des Mittelpunktswinkels des Kreissegments ist in Abhängigkeit von der Länge und dem Außendurchmesser des Stützkörpers so zu wählen, dass das Steckstück über einen möglichst großen Winkelbereich in einem Einbauraum abrollen kann. Im Falle des Vorhandenseins einer Ummantelung ist ein Kompromiss zwischen einer möglichst großen gewölbten Abrollfläche und einer noch ausreichenden Wandstärke für die Ummantelung zu finden. Für übliche Steckstückgrößen (1 mm - 100 mm Länge mit einem üblichen Längen/Außendurchmesser-Verhältnis von etwa 1,25) haben sich bei hantelförmiger Ausbildung des Steckstücks Mittelpunktswinkel von kleiner/gleich 70° als günstig erwiesen. Besonders bevorzugt liegt der Mittelpunktswinkel zwischen 40° und 55°.

Gleiche Bezugszeichen bezeichnen in den Figuren gleiche Teile.

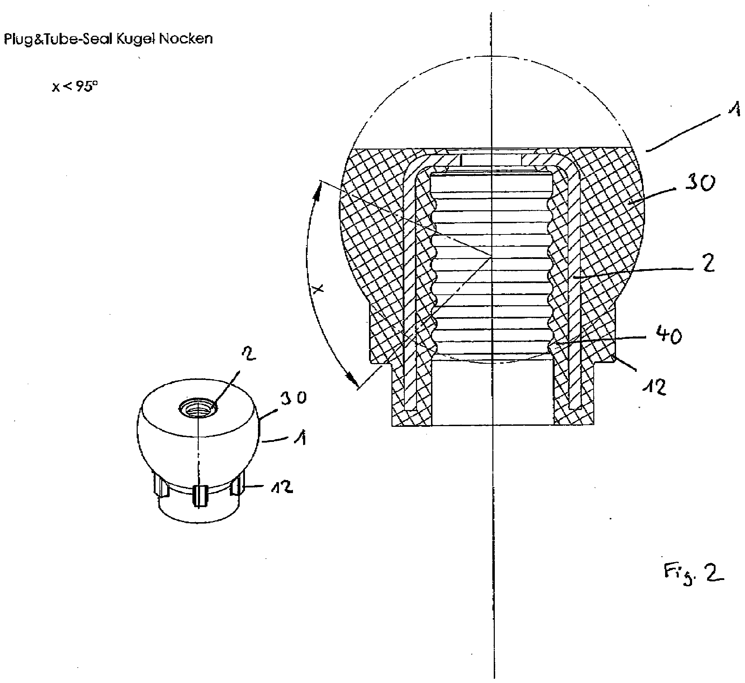

Das in Fig. 2 dargestellten Ausführungsbeispiele weist nur an einem Ende des Stützkörpers 2 einen außen umlaufenden kugelförmigen Dichtwulst 30 auf. An dem anderen Endes des Stützkörpers 2 ist jeweils ein umlaufendes, radial nach innen weisendes zweites Dichtelement 40 vorgesehen. Dieses Ende des Steckstücks 1 ist zur Abdichtung gegenüber der Außenfläche eines in dieses Ende einsteckbaren rohrförmigen Hohlkörpers geeignet. Ohne Beschränkung der Allgemeinheit liegen bei den dargestellten Ausführungsformen das erste 30 und das zweite Dichtelement 40 in der gleichen Radialebene. Dies hat den Vorteil, dass das Steckstück 1 als Verbindungselement keinen zusätzlichen Bauraum beansprucht, da die zu verbindenden Zylinderflächen, d. h. die rohrförmigen Hohlkörper, übereinander geschoben werden können. Das dargestellte Ausführungsbeispiel eignet sich daher insbesondere für enge Bauräume. Bei diesem Typ eines Steckstücks haben sich Mittelpunktswinkel von vorzugsweise kleiner/gleich 130°, besonders bevorzugt kleiner/gleich 95° bewährt.

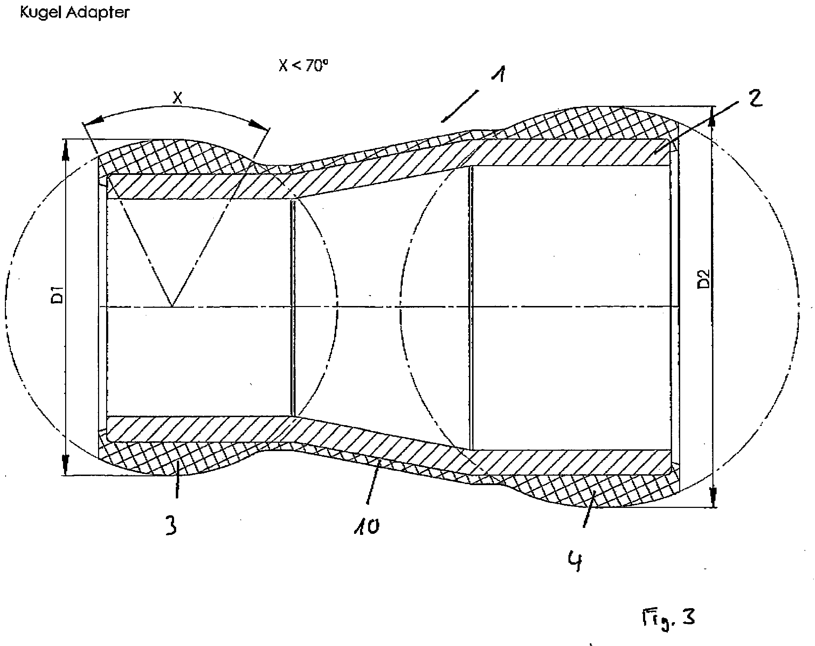

Das Ausführungsbeispiel aus Fig. 3 ist wieder hantelförmig ausgebildet mit zwei umlaufenden erfindungsgemäß ausgebildeten kugelförmigen Dichtwülsten 3, 4 an den jeweiligen Enden des Stützkörpers 2. Es besitzt nicht nur eine Verbindungs- sondern auch noch eine Adapterfunktion, da der Innendurchmesser des Stützkörpers 2 sich von dem einen stirnseitigen Ende zum anderen stirnseitigen Ende hin konisch aufweitet. Dieses Steckstück 1 ist zur Verbindung von Zylinderflächen mit unterschiedlichen Innendurchmessern (D1, D2 mit D1< D2) geeignet.

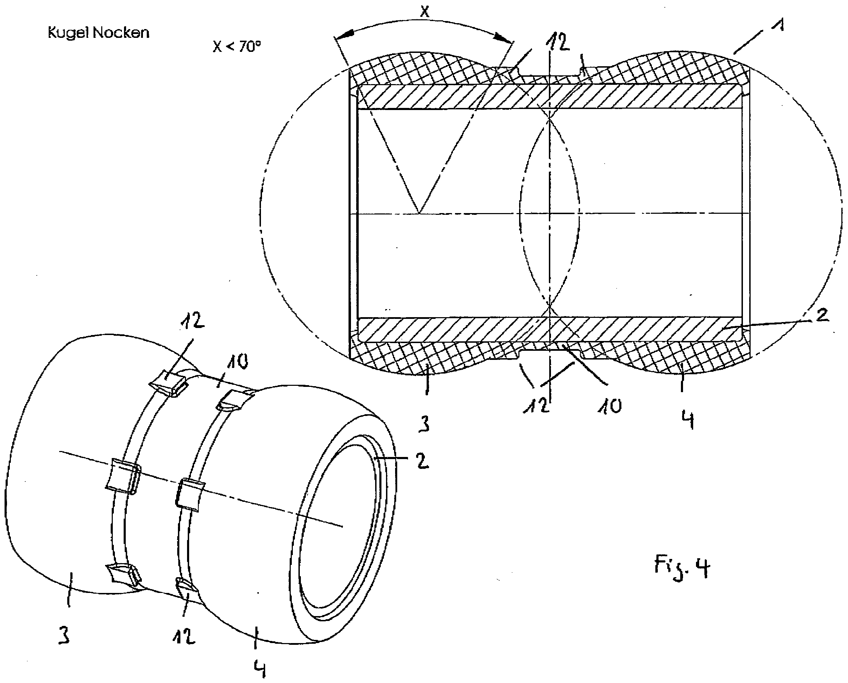

Das in Fig. 4 dargestellte Steckstück 1 entspricht dem in Figur 1 dargestellten. Es weist aber zusätzlich auf seinem Außenumfang in ringförmig umlaufenden Bereichen verteilt angeordnete Zentriernocken 12 auf. Diese haben die Aufgabe, sich an die abzudichtende Zylinderfläche anzulegen, um das Steckstück beim Einbau in den ersten Einbauraum zu zentrieren. Damit wird das Aufstecken in den zweiten Einbauraum erleichtert. Zentrienocken sind daher besonders hilfreich, wenn mehrere Steckstücke gleichzeitig montiert werden sollen oder bei Blindmontage.

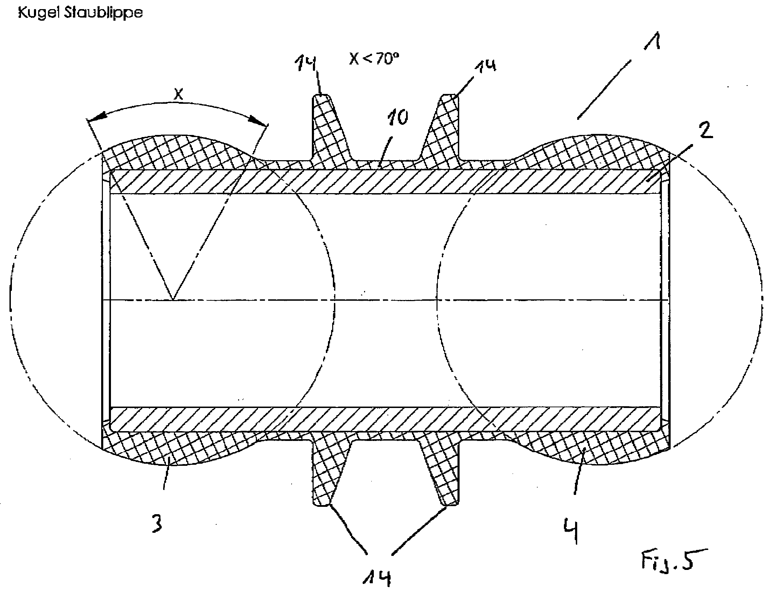

Das Ausführungsbeispiel aus Fig. 5 entspricht ebenfalls dem aus Fig. 1. Es weist zusätzlich Staublippen 14 auf. Die Staublippen 14 halten Verunreinigungen von außen von den Dichtwülsten 3, 4 fern.

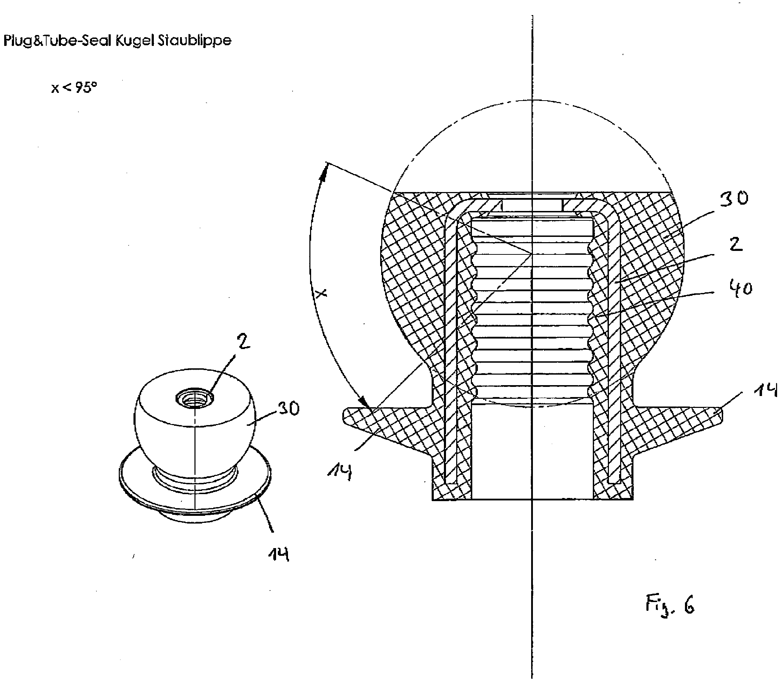

Das Ausführungsbeispiel aus Fig. 6 entspricht dem in Fig. 2 dargestellten, es ist aber darüber hinaus noch mit Staublippen 14 ausgerüstet.

## Patentansprüche

1. Steckstück (1) zum dichtenden Verbinden zweier einander zugeordneter Zylinderflächen, umfassend einen im Wesentlichen rohrförmigen Stützkörper (2), welcher an seinen Enden ringförmig umlaufende Dichtelemente aufweist, die zur Herstellung einer dichten Verbindung mit jeweils einer der abzudichtenden Zylinderflächen in Eingriff bringbar sind, wobei wenigstens eines der Dichtelemente als auf der Außenfläche des Stützkörpers (2) ringförmig umlaufender Dichtwulst (3, 30) mit einer kugelförmig gewölbten Dichtfläche ausgebildet ist, **dadurch gekennzeichnet, dass** der Kugelradius der Dichtfläche (3, 30) so gewählt ist, dass der Kugel-Mittelpunkt in etwa auf der Symmetrieachse des Stützkörpers (2) liegt.

2. Steckstück nach Anspruch 1, **dadurch gekennzeichnet, dass** die Abweichung des Kugelmittelpunkts von der Symmetrieachse weniger als 10 %, besonders bevorzugt nur etwa 2 % des Kugelradius beträgt.

3. Steckstück nach Anspruch 1 oder 2, **dadurch gekennzeichnet**, an dem zweiten Ende des Stützkörpers (2) ein weiterer, auf dem Außenumfang des Stützkörpers umlaufender Dichtwulst (4) vorgesehen ist.

4. Steckstück nach Anspruch 3, **dadurch gekennzeichnet, dass** es eine Hantelform aufweist, wobei der erste (3) und der zweite Dichtwulst (4) an den beiden Enden zueinander spiegelbildlich ausgebildet sind.

5. Steckstück nach einem der Ansprüche 1 bis 3, **dadurch gekennzeichnet**, das sich der Innendurchmesser des Stützkörpers (2) sich von dem einen Ende zum anderen Ende hin aufweitet.

6. Steckstück nach Anspruch 1 oder 2, **dadurch gekennzeichnet, dass** an dem zweiten Ende des Stützkörpers (2) ein weiteres, radial nach innen weisendes zweites Dichtelement (40) vorgesehen ist.

7. Steckstück nach Anspruch 6, **dadurch gekennzeichnet, dass** der erste Dichtwulst (30) und das nach innen weisende zweite Dichtelement (40) in der gleichen Axialebene liegen.

8. Steckstück nach wenigstens einem der Ansprüche 1 bis 7, **dadurch gekennzeichnet, dass** der Stützkörper (2) auf seinem Außen- und/oder Innenumfang wenigstens teilweise mit einer Ummantelung (10) versehen ist.

9. Steckstück nach Anspruch 8, **dadurch gekennzeichnet, dass** die Dichtelemente (3, 4, 30, 40) und die Ummantelung (10) einstückig und materialeinheitlich ausgebildet sind.

## Claims

1. Plug-in piece (1) for the sealing connection of two mutually assigned cylindrical surfaces, comprising a substantially tubular support body (2) which, at the ends thereof has annularly encircling sealing elements which can each be brought into engagement with one of the cylindrical surfaces to be sealed in order to produce a tight connection, wherein at least one of the sealing elements is designed as a sealing bead (3, 30) which annularly encircles the outer surface of the support body (2) and has a spherically curved sealing surface, **characterized in that** the radius of the sphere of the sealing surface (3, 30) is selected in such a manner that the centre point of the sphere lies approximately on the axis of symmetry of the support body (2).

2. Plug-in piece according to Claim 1, **characterized in that** the deviation of the centre point of the sphere from the axis of symmetry is less than 10%, particularly preferably only approximately 2% of the radius of the sphere.

3. Plug-in piece according to Claim 1 or 2, **characterized in that** a further sealing bead (4) encircling the outer circumference of the support body is provided at the second end of the support body (2).

4. Plug-in piece according to Claim 3, **characterized in that** it is in the shape of a dumb-bell, wherein the first sealing bead (3) and the second sealing bead (4) are formed in a mirror-inverted manner with respect to each other at the two ends.

5. Plug-in piece according to one of Claims 1 to 3, **characterized in that** the inside diameter of the support body (2) expands from one end towards the other end.

6. Plug-in piece according to Claim 1 or 2, **characterized in that** a further, radially inwardly pointing second sealing element (40) is provided at the second end of the support body (2).

7. Plug-in piece according to Claim 6, **characterized in that** the first sealing bead (30) and the inwardly pointing, second sealing element (40) lie in the same axial plane.

8. Plug-in piece according to at least one of Claims 1 to 7, **characterized in that** the outer and/or inner circumference of the support body (2) is at least partially provided with a casing (10).

9. Plug-in piece according to Claim 8, **characterized in that** the sealing elements (3, 4, 30, 40) and the casing (10) are formed as a single part and from the same material.

## Revendications

1. Pièce enfichable (1) servant à raccorder de manière étanche deux surfaces cylindriques associées l'une à l'autre, comportant un corps de support (2) sensiblement tubulaire, lequel comprend, à ses extrémités, des éléments d'étanchéité périphériques de manière annulaire qui peuvent être amenés en prise avec respectivement l'une des surfaces cylindriques à rendre étanches pour réaliser un raccordement étanche, au moins l'un des éléments d'étanchéité étant réalisé sous forme de bourrelet d'étanchéité (3, 30) périphérique de manière annulaire sur la surface extérieure du corps de support (2), lequel bourrelet d'étanchéité est doté d'une surface d'étanchéité bombée de manière sphérique, **caractérisée en ce que** le rayon de sphère de la surface d'étanchéité (3, 30) est sélectionné de telle sorte que le centre de sphère se situe approximativement sur l'axe de symétrie du corps de support (2).

2. Pièce enfichable selon la revendication 1, **caractérisée en ce que** l'écart du centre de sphère par rapport à l'axe de symétrie est égal à moins de 10 %, de manière particulièrement préférée égal à seulement approximativement 2 % du rayon de sphère.

3. Pièce enfichable selon la revendication 1 ou 2, **caractérisée en ce qu'**un autre bourrelet d'étanchéité (4) périphérique sur la périphérie extérieure du corps de support est prévu à la deuxième extrémité du corps de support (2).

4. Pièce enfichable selon la revendication 3, **caractérisée en ce qu'**elle présente une forme d'haltère, le premier (3) et le deuxième bourrelet d'étanchéité (4) étant réalisés de manière à présenter une symétrie spéculaire l'un par rapport à l'autre aux deux extrémités.

5. Pièce enfichable selon l'une quelconque des revendications 1 à 3, **caractérisée en ce que** le diamètre intérieur du corps de support (2) s'agrandit de l'une des extrémités à l'autre extrémité.

6. Pièce enfichable selon la revendication 1 ou 2, **caractérisée en ce qu'**un autre deuxième élément d'étanchéité (40) tourné radialement vers l'intérieur est prévu à la deuxième extrémité du corps de support (2).

7. Pièce enfichable selon la revendication 6, **caractérisée en ce que** le premier bourrelet d'étanchéité (30) et le deuxième élément d'étanchéité (40) tourné vers l'intérieur se situent dans le même plan axial.

8. Pièce enfichable selon au moins l'une quelconque des revendications 1 à 7, **caractérisée en ce que** le corps de support (2) est doté au moins partiellement d'une enveloppe (10) sur sa périphérie extérieure et/ou intérieure.

9. Pièce enfichable selon la revendication 8, **caractérisée en ce que** les éléments d'étanchéité (3, 4, 30, 40) et l'enveloppe (10) sont réalisés d'une seule pièce et en le même matériau.
